Europäisches Patentamt

European Patent Office

Office européen des brevets

(19)

(11) Publication number: **0 089 791**
**B1**

(12) EUROPEAN PATENT SPECIFICATION

(45) Date of publication of patent specification: 27.05.87

(51) Int. Cl.⁴: **B 29 C 59/10, H 01 T 19/00**

(21) Application number: 83301343.6

(22) Date of filing: 11.03.83

(54) Process and apparatus for the electrical treatment of air-cushion films.

(30) Priority: 12.03.82 DE 3209114

(43) Date of publication of application:
28.09.83 Bulletin 83/39

(45) Publication of the grant of the patent:
27.05.87 Bulletin 87/22

(84) Designated Contracting States:
AT FR GB NL

(56) References cited:
DE-A-1 504 206
DE-A-2 461 865
DE-A-2 754 425
DE-A-2 836 867
DE-A-2 847 495
DE-B-2 540 681
DE-U-7 914 659
FR-A-1 365 106

(73) Proprietor: The British Petroleum Company
p.l.c.
Britannic House Moor Lane
London EC2Y 9BU (GB)

(72) Inventor: Gruber, Rudolf
Schabing 2
D-8091 Frabertsham (DE)
Inventor: Sturm, Valentin
Doennigesstrasse 9
D-8000 Munchen 70 (DE)

(74) Representative: Crack, Richard David et al
c/o The British Petroleum Company plc Patents
Division Chertsey Road
Sunbury-on-Thames Middlesex, TW16 7LN (GB)

## Description

The invention relates to a process and an apparatus for treating air-cushion films, consisting of a first, smooth plastic film and second plastic film provided with recesses, in which the two films are bonded together in such a way that the first film seals the recesses of the second film, for increasing the surface energy with at least one electrode designed as a profile or knife electrode and mounted tangentially to a counter-electrode designed as a roller electrode, which is arranged on the same side of the air-cushion film to be treated.

Apparatus of the type referred to above is known. In one known device, the counter-electrode is designed as a roller electrode and the live electrode is designed as a profile or knife electrode (German Laid Open Specification 24 61 865). These known devices serve to improve the adhesivity between one material which may be conducting or non-conducting and a second material, for example a plastic film, which is in a more or less molten state. With the known devices, the conducting or non-conducting initial material is supposed to be prepared in such a way that the second material can be applied to the initial material in an optimum manner.

Air-cushion films (initial material), especially for packaging purposes, are frequently provided on their sides designed with recesses with a sticky second material. The object of this is to ensure that the object to be packed simply has to be wrapped and the adhesive power of the second material guarantees that the air-cushion film on the packaged object cannot slip off. When the packaged material is unpacked, no residue of the adhesive second material must remain on the object originally packed. For this purpose it is necessary that the adhesive second material should possess maximum bonding to the air-cushion film. From German Registered Design 79 14 659 a corresponding air-cushion film is known in which a layer consisting only of adhesive is applied to nub bottoms and the bordering curved transition zones which have been pre-treated exclusively by abrasion or oxidation. This German Registered Design, however, contains no references to the execution of this pre-treatment.

In the production of air-cushion films, during vacuum shaping of the recesses irregular bottom surfaces are imparted. These irregularities lead during pre-treatment, for example as a result of a corona discharge, to irregular results. In consequence of the variable pre-treatment the adhesive second material is not evenly distributed or not bonded uniformly to the recesses. As a result of this residual deposits may remain on the packaged objects.

From German Laid Open Specification 28 47 495 which shows the features of the first part of claims 1 and 2 a device is known in which air-cushion films are pressed by a spring or by electrostatic charge on to the roller electrodes. In a parallel arrangement of the recesses of the air-cushion film, but also in the case of a staggered arrangement of the recesses of the air-cushion film, the torque of the air cushions concluded in the recesses is variable. These variable torques lead to a constantly pulsating movement of the springs. Bound up with a "lagging behind" of the air-cushions in respect of the roller electrode in the direction of movement of the air-cushion film, there also occurs an irregular treatment of the recess bottoms and the adjacent curved transition zones. The cyclic irregularities thus occurring are just as disadvantageous as the above-mentioned irregularities resulting from the mode of production of the air-cushion films.

Pressing the air-cushion film on to the roller electrodes by an electrostatic charge on the air-cushion film leads to an adverse effect on the corona field if one operates with two profile or knife electrodes tangentially to the roller electrode.

From German Laid Open Specification 24 61 865 a device is known in which the roller electrode lies at the top end of a pressure chamber which is impinged on by gas and the profile or knife electrodes form the top closure of this pressure chamber. As a result of a discharge gap between the profile or knife electrodes and the roller electrode the material for treatment is acted on by pressure in this zone. Particularly in the case of structured surfaces such as the recess side of air-cushion films, the result of this is that the material to be treated is set into oscillations which have an adverse effect on the treatment. In addition, the discharge gap must be comparatively narrow, which does not facilitate optimum cooling of the roller electrode by the gas current.

The object of present invention is to provide a process and an apparatus in which a uniform treatment of the surface of the conducting or non-conducting material is improved, by avoiding the defects of the prior art.

This problem is solved according to the invention in a process according to the Preamble of Claim 1 by the characterising part of Claim 1 and an apparatus according to the Preamble of Claim 2 by the characterising part of Claim 2.

The process according to the invention achieves an intensive and uniform treatment of the recess bottoms and the adjacent curved transition zones. The apparatus according to the invention is suited to carrying out this process. Without the recesses being greatly deformed, it makes possible at the first roller electrode an equalisation of all the recesses in the zone in question. At the second roller electrode a direct physical contact between the roller electrode and the recesses of the air-cushion film is avoided and at the same time the corona field has a long-lasting effect on the recess bottoms.

The present invention is illustrated by the following Drawings. In these:

Fig. 1 shows a partially cut away diagrammatical front view of the apparatus according to the invention,

Fig. 2 shows a diagrammatical cross-section through a roller electrode with two profile or knife electrodes,

Fig. 3 shows a diagrammatical cross-section through a roller electrode with a pin electrode.

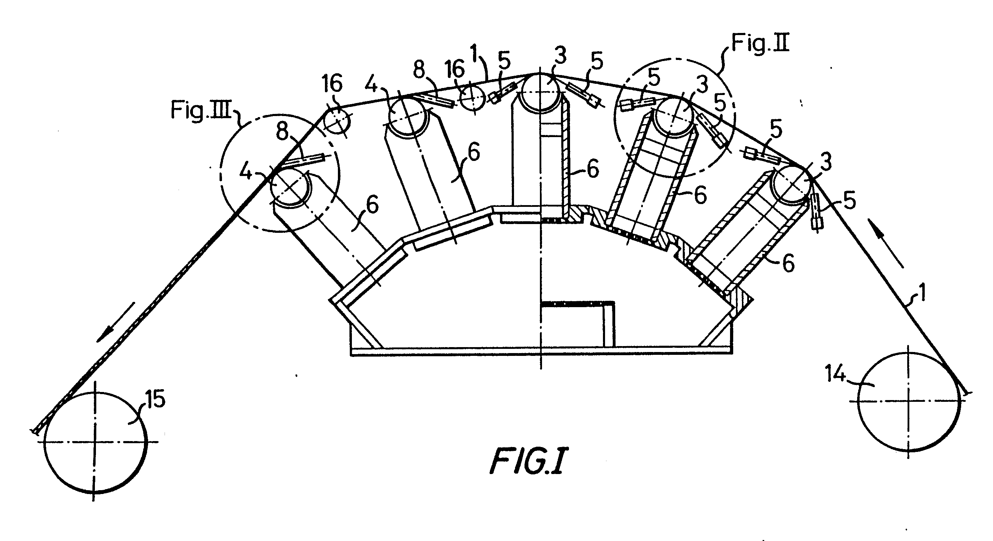

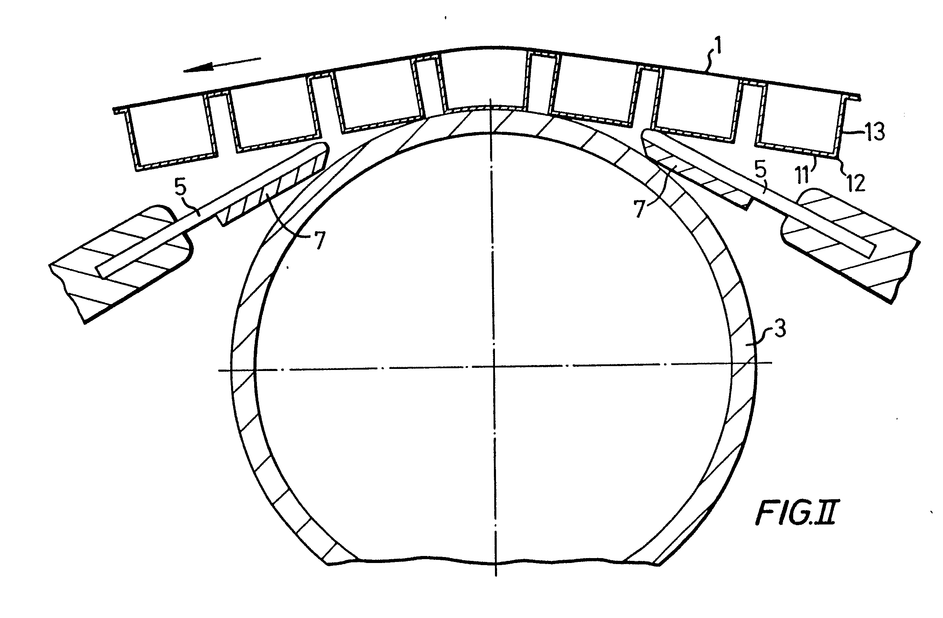

Referring to Fig. 1 an air-cushion film 1 comes in the direction of the arrow from a run-in roller 14. It is passed over three roller electrodes 3 of a first type. Over two roller electrodes 4 of a second type the air-cushion film 1 passes to a run-out roller 15. Between the last of the roller electrodes 3 of the first type and the first of the two roller electrodes 4 of the second type between the two roller electrodes 4 the air-cushion film 1 is guided by two support rollers 16. The air-cushion film 1 progresses — in a manner which cannot be seen from this illustration — so that its recesses point in the direction of the roller electrodes 3 or 4.

On both sides of each of the roller electrodes of the first type there are located a pair of knife electrodes 5. Behind each of the roller electrodes 3 and 4 of both types there are air chambers 6. The pressure in these air chambers 6 preferably amounts to 300 to 600 mm water col. The top ends of the air chambers 6 surround the roller electrodes 3 and 4 of both types up to a maximum of half their circumference. The air current flowing out of the air chambers 6 serves to cool the roller electrodes 3 and 4 of both types and to cool the air-cushion film 1. By having the roller electrodes 3 and 4 of both types only partly surrounded by the air chambers 6, a build-up of air causing the air-cushion film 1 to oscillate and hence removing it from the field of action to the corona field is avoided.

The frequency of the spark discharge of all the electrodes preferably amounts to 20 to 30 khz for an output voltage of a maximum of 15 KV.

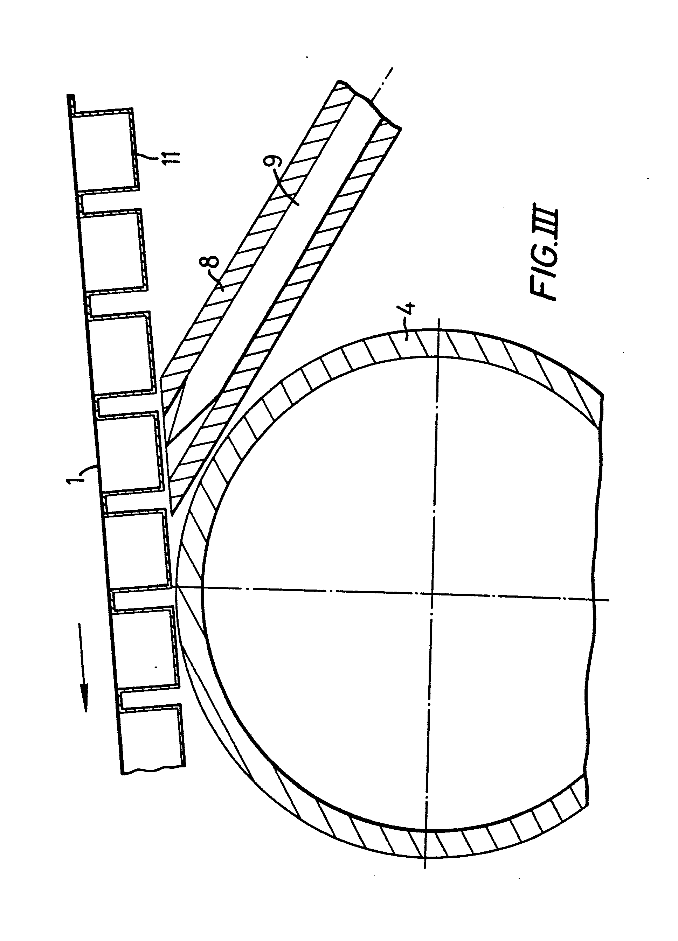

Fig. 2 represents a roller electrode 3 of the first type in greater detail. It can clearly be seen how the air-cushion film 1 with the recesses 11 pointing in the direction of the roller electrode 3 of the first type runs over this roller electrode 3 of the first type in a lightly curved path. The sector where the air-cushion film 1 rests on the roller electrode 3 of the first type is chosen in such a way that at least one recess bottom 11 is always in contact with the roller electrode 3 of the first type. On both sides of this contact zone is located a pair of knife electrodes 5. These knife electrodes 5 are shielded by means of insulating plates 7 in the direction of the roller electrode 3 of the first type. These insulating plates 7 consist preferably of polytetrafluorethylene. They have the effect of preventing the sparks from discharging too soon on the roller electrode 3 of the first type.

With the roller electrodes 3 of the first type it is important that the recesses of the air-cushion film 1 should be put under pressure as far as possible, which means that first of all they arch up towards the knife electrode 5 lying in the direction of movement, thereafter to be inflated opposite the knife electrode 5 located in the opposite direction of movement. As a result of this an optimum treatment of a zone 12 where the recess bottoms 11 meet recess sides 13 is achieved.

Fig. 3 represents a roller electrode 4 of the second type in greater detail. The air-cushion film 1 has no direct contact with roller electrode 4 of the second type. It is positioned by the support rollers 16 (not shown in this illustration) at a suitable distance. The pin electrode 9 is surrounded by a ceramic sleeve 8. The effect of this is to divert the corona field from the roller electrode 4 of the second type a little and hence to act for longer on the recess bottoms 11.

The roller electrodes 3 of the first type serve in conjunction with the knife electrodes 5 first and foremost for the treatment of the transition zone 12 of the recess bottoms 11 to form a nub shell 13. The roller electrodes 4 of the second type serve first and foremost for the treatment of the recess bottoms 11 themselves. It has been shown to be advantageous for all the roller electrodes 3 and 4 and also the run-in roller 14 and run-out roller 15 to be driven. In this connection it is especially advantageous for the run-in roller 14 and the electrode rollers 3 and 4 to be driven in parallel, whilst the run-out roller 15 can be controlled separately.

**Claims**

1. A process for the treatment of air-cushion film (1) to increase surface energy, the air-cushion film (1) consisting of a first smooth plastic film and a second plastic film provided with recesses, the first film and the second film being bonded to each other such that the first film seals the recesses of the second film, the process comprising in a first stage exposing the recesses to pressure and treating the air-cushion film (1) with a spark discharge between at least one profile or knife electrode (5) and a counter-electrode designed as a roller electrode (3), the electrodes (3, 5) being arranged on the same side of the air-cushion film (1), the profile or knife electrode (5) being arranged tangentially to the roller electrode (3) characterised in that;

(A) the recesses of the air-cushion film (1) are put under pressure by passing the air-cushion film in a curved path over the roller electrode (3) such that the recess bottoms (11) are pressed against the roller electrode (3);

(B) the air-cushion film (1) is also subjected to a second stage in which it is treated with a spark discharge between at least one pin electrode (9) and a counter electrode designed as a roller electrode (4), the electrodes (4, 9) being arranged on the same side of, but not in contact with, the air-cushion film (1), the pin electrode (9) being arranged tangentially to the roller electrode (4) and

(C) air is passed over the roller electrodes (3, 4) of the first and second stages via air chambers (6) arranged below the roller electrodes (3, 4), the top ends of the air chambers (6) surrounding the roller electrodes (3, 4) up to a maximum of half the diameter of the roller electrode (3, 4).

2. Apparatus for the treatment of air-cushion films (1) to increase surface energy, the air-cushion film (1) consisting of a first smooth plastic film and a second plastic film provided with recesses, the first film and the second film being bonded to each other such that the first film seals the recesses of the second film, comprising at least one profile or knife electrode (5) arranged tangentially to a counter-electrode designed as a roller electrode (3), the electrodes (3, 5) being arranged such that, in use, they are on the same side of the air-cushion film and means to apply pressure to the air-cushion film (1) characterised in that;

(A) the means for applying pressure to the air-cushion film (1) comprises means for passing the film in a curved path over the roller electrode (3) such that, in use, the recess bottoms (11) of the air-cushion film (1) are pressed against the roller electrode (3);

(B) as viewed in the running direction of the air-cushion film (1), at least one roller electrode (3) of a first type with knife electrodes (5) arranged on both sides is arranged in front of at least one roller electrode (4) of a second type with a pin electrode (9) arranged tangentially to the roller electrode (4) of the second type;

(C) below the roller electrodes (3, 4) of the first type and second type are arranged air chambers (6) the top ends of which surround the roller electrodes (3, 4) up to a maximum of half the diameter of the roller electrode (3, 4) and

(D) means for passing the air-cushion film (1) over the one or more roller electrodes (4) of the second type such that the air-cushion film (1) does not contact the roller electrodes (4).

3. Apparatus according to Claim 2, characterised by the fact that an insulating plate (7) is fitted to the surface of at least one knife electrode (5) turned to the roller electrode (3) of the first type.

4. Apparatus according to Claim 3, characterised by the fact that the insulating plate (7) consists of polytetrafluorethylene.

5. Apparatus according to one or more of Claims 2 to 4, characterised by the fact that the pin electrode (9) is surrounded by a ceramic sleeve (8).

6. Apparatus according to one or more of Claims 2 to 5, characterised by the fact that the pin electrode (9) is arranged, as viewed in the running direction of the air-cushion film (1), in front of the roller electrode (4) of the second type.

7. Apparatus according to one or more of Claims 2 to 6, characterised by the fact that, as viewed in the running direction of the air-cushion film (1), in front of the roller electrodes (3, 4) a run-in roller (14) and/or after the roller electrodes (3, 4) a run-out roller (15) is arranged.

8. Apparatus according to one or more of Claims 2 to 7, characterised by the fact that at least one roller electrode (3 or 4) and/or at least the run-in roller (14) and/or the run-out roller (15) are driven.

9. Apparatus according to Claim 8, characterised by the fact that all roller electrodes (3, 4) and the run-in roller (14) are driven synchronously and the run-out roller (15) is separately adjustable.

10. Apparatus according to any one of Claims 2 to 9 characterised by the fact that air in the air chambers (6) is at a pressure of 300 to 600 mm water col.

11. Apparatus according to one or more of Claims 2 to 10, characterised by the fact that an output voltage of a maximum of 15 KV A/C with a frequency of 20 to 30 kHz is applied to all electrodes (3, 4, 5 and 9).

12. Apparatus according to one or more of Claims 2 to 11, characterised by the fact that the means for passing the air-cushion film (1) over the one or more roller electrodes of the second type (4) comprises, as viewed in the running direction of the air-cushion film (1), a supporting roller (16) arranged between the last roller electrode (3) of the first type and the first roller electrode (4) of the second type and/or a supporting roller (16) arranged between the roller electrodes (4) of the second type.

**Patentansprüche**

1. Verfahren zur Behandlung von Luftpolsterfolie (1), um die Oberflächenenergie zu erhöhen, wobei die Luftpolsterfolie (1) aus einer ersten glatten Kunststoffolie und einer zweiten Kunststoffolie mit noppenartigen Vertiefungen besteht, die erste Folie mit der zweiten Folie so miteinander verbunden ist, daß die erste Folie die Noppen der zweiten Folie verschließt, das Verfahren eine erste Stufe umfaßt, in der die Noppen einem Druck ausgesetzt und die Luftpolsterfolie (1) mit einer Funkenentladung zwischen mindestens einer Profil- oder Messerelektrode (5) und einer als Walzenelektrode (3) ausgebildeten Gegenelektrode behandelt wird, wobei die Elektroden (3, 5) auf der gleichen Seite der Luftpolsterfolie und die Profiloder Messerelektroden (5) tangential zur Walzenelektrode (3) angeordnet sind, dadurch gekennzeichnet, daß

(A) die Noppen der Luftpolsterfolie (1) unter Druck gesetzt werden, indem die Luftpolsterfolie so einem Bogen über die Walzenelektrode (3) geführt wird, daß die Noppenböden (11) gegen die Walzenelektrode (3) gedrückt werden,

(B) die Luftpolsterfolie (1) noch einer zweiten Stufe unterworfen wird, in der sie mit einer Funkenentladung zwischen mindestens einer Stiftelektrode (9) und einer als Walzenelektrode (4) ausgebildeten Gegenelektrode behandelt wird, wobei die Elektroden (4, 9) auf der gleichen Seite, aber nicht in Kontakt mit der Luftpolsterfolie (1) angeordnet sind und die Stiftelektrode (9) tangential zur Walzenelektrode (4) steht, und

(C) Luft über die Walzenelektroden (3, 4) der ersten und zweiten Stufe durch Luftkammern (6) geblasen wird, die unterhalb der Walzenelektroden (3, 4) angeordnet sind, und die oberen Enden der Luftkammern (6) die Walzenelektroden (3, 4) bis maximal zur Hälfte des Querschnitts der Walzenelektroden (3, 4) umschließen.

2. Vorrichtung zur Behandlung von Luftpolsterfolien (1), um die Oberflächenenergie zu erhöhen, wobei die Luftpolsterfolie (1) aus einer ersten glatten Kunststoffolie und aus einer zweiten Kunststoffolie mit noppenartigen Vertiefungen besteht und die erste Folie mit der zweiten Folie derart miteinander verbunden ist, daß die erste Folie die Noppen der zweiten Folie verschließt, die Vorrichtung wenigstens eine Profil- oder Messerelektrode (5) umfaßt, die tangential zu der als Walzenelektrode (3) ausgebildeten Gegenelektrode steht, wobei die Elektroden (3, 5) so angeordnet sind, daß sie bei Benutzung auf der gleichen Seite der Luftpolsterfolie liegen, und die Vorrichtung Einrichtungen aufweist, um Druck auf die Luftpolsterfolie (1) auszuüben, dadurch gekennzeichnet, daß

(A) die Einrichtungen, um Druck auf die Luftpolsterfolie (1) auszuüben, so ausgebildet sind, daß die Folie in einem Bogen über die Walzenelektrode (3) geführt wird, wodurch im Benutzungsfalle die Noppenböden (11) der Luftpolsterfolie (1) gegen die Walzenelektrode (3) gedrückt werden,

(B) in Laufrichtung der Luftpolsterfolie (1) zunächst mindestens eine Walzenelektrode (3) des ersten Typs mit Messerelektroden (5) auf beiden Seiten angeordnet ist und danach mindestens eine Walzenelektrode (4) des zweiten Typs mit einer Stiftelektrode (9) folgt, die tangential zu der Walzenelektrode (4) des zweiten Typs steht,

(C) unterhalb der Walzenelektroden (3, 4) des ersten und zweiten Typs Luftkammern (6) angeordnet sind, deren Enden die Walzenelektroden (3, 4) bis maximal zur Hälfte des Querschnitts der Walzenelektroden (3, 4) umfassen, und

(D) Einrichtung bestehen, um die Luftpolsterfolie (1) über die eine oder mehrere Walzenelektroden (4) des zweiten Typs so zu führen, daß die Luftpolsterfolie (1) die Walzenelektroden (4) nicht berührt.

3. Vorrichtung nach Anspruch 2, dadurch gekennzeichnet, daß mindestens an einer Messerelektrode (5) an der der Walzenelektrode (3) des ersten Typs zugewandten Oberfläche eine Isolationsplatte (7) angebracht ist.

4. Vorrichtung nach Anspruch 3, dadurch gekennzeichnet, daß die Isolationsplatte (7) aus Polytetrafluorethylene besteht.

5. Vorrichtung nach einem oder mehreren der Ansprüche 2—4, dadurch gekennzeichnet, daß die Stiftelektrode (9) von einer Keramikhülse (8) umgeben ist.

6. Vorrichtung nach einem oder mehreren der Ansprüche 2—5, dadurch gekennzeichnet, daß die Stiftelektrode (9) in Laufrichtung der Luftpolsterfolie (1) vor der Walzenelektrode (4) des zweiten Typs angeordnet ist.

7. Vorrichtung nach einem oder mehreren der Ansprüche 2—6, dadurch gekennzeichnet, daß, in Laufrichtung der Luftpolsterfolie (1) betrachtet, vor den Walzenelektroden (3, 4) eine Einlaufwalze (14) und/oder nach den Walzenelektroden (3, 4) eine Auslaufwalze (15) angeordnet ist.

8. Vorrichtung nach einem oder mehreren der Ansprüche 2—7, dadurch gekennzeichnet, daß mindestens eine Walzenelektrode (3 oder 4) und/oder mindestens die Einlaufwalze (14) und/oder die Auslaufwalz (15) angetrieben wird.

9. Vorrichtung nach Anspruch 8, dadurch gekennzeichnet, daß alle Walzenelektroden (3, 4) und die Einlaufwalze (14) synchron angetrieben sind und die Auslaufwalze (15) separat regelbar ist.

10. Vorrichtung nach jedem der Ansprüche 2—9, dadurch gekennzeichnet, daß die Luft in den Luftkammern (6) unter einem Druck von 300 bis 600 mm Wassersäule steht.

11. Vorrichtung nach einem oder mehreren der Ansprüche 2—10, dadurch gekennzeichnet, daß eine Ausgangsspannung von maximal 15 KV mit einer Frequenz von 20 bis 30 kHz bei allen Elektroden (3, 4, 5 und 9) angewendet wird.

12. Vorrichtung nach einem oder mehreren der Ansprüche 2—11, dadurch gekennzeichnet, daß, um die Luftpolsterfolie (1) über eine oder mehrere Walzenelektroden des zweiten Typs zu führen (4), in Laufrichtung der Luftpolsterfolie (1) betrachtet, zwischen der letzten Walzenelektrode (3) des ersten Typs und der ersten Walzenelektrode (4) des zweiten Typs eine Stützwalze (16) angeordnet und/oder eine Stützwalze (16) zwischen den Walzenelektroden (4) des zweiten Typs angeordnet ist.

**Revendications**

1. Procédé de traitement d'un film (1) d'amortissement pneumatique destiné à augmenter son énergie supercielle, le film (1) d'amortissement pneumatique étant constitué d'un premier film lisse de matière plastique et d'un second film de matière plastique ayant des cavités, le premier film et le second film étant collés l'un à l'autre afin que le premier film ferme de manière étanche les cavités du second film, le procédé comprenant, dans une première étape, l'exposition des cavités à une pression et le traitement du film (1) d'amortissement pneumatique par décharge électrique disruptive entre au moins une électrode profilée ou en forme de couteau (5) et une électrode auxiliaire appelée électrode (3) en forme de rouleau, les électrodes (3, 5) étant placées du même côté du film (1) d'amortissement pneumatique, l'électrode profilée ou en forme de couteau (5) étant disposée tangentiellement à l'électrode en forme de rouleau (3), caractérisée en ce que

(A) les cavités du film (1) d'amortissement pneumatique sont mises sous pression par passage du film d'amortissement suivant un trajet courbe au-dessus de l'électrode en forme de rouleau (3) afin que les fonds (11) des cavités soient repoussés contre l'électrode en forme de rouleau (3),

(B) le film d'amortissement pneumatique (1) est soumis à une seconde étape de traitement dans laquelle il est traité par une décharge disruptive entre au moins une électrode (9) en forme de tige et une électrode auxiliaire appelée électrode en forme de rouleau (4), les électrodes (4, 9) étant placées du même côté du film (1) d'amortissement mais sans être à son contact, l'électrode (9) en forme de tige étant placée tangentiellement par rapport à l'électode en forme de rouleau (4), et

(C) de l'air est transmis sur les électrodes en forme de rouleau (3, 4) de la première et de la seconde étape, par l'intermédiaire de chambres pneumatiques (6) placées au-dessous des électrodes en forme de rouleau (3, 4), les extrémités supérieures des chambres pneumatiques (6) entourant les électrodes en forme de rouleau (3, 4) au maximum jusqu'à la moitié du diamètre de l'électrode en forme de rouleau (3, 4).

2. Appareil de traitement de films (1) d'amortissement pneumatique afin que leur énergie superficielle soit accrue, le film d'amortissement pneumatique (1) étant constitué d'un premier film lisse de matière plastique et d'un second film de matière plastique ayant des cavités, le premier film et le second film étant collés l'un à l'autre afin que le premier film ferme les cavités du second film de manière étanche, l'appareil comprenant au moins une électrode profilée ou en forme de couteau (5) placée tangentiellement à une électrode auxiliaire appelée électrode en forme de rouleau (3), les électrodes (3, 5) étant disposées de manière que, pendant l'utilisation, elles se trouvent du même côté du film d'amortissement pneumatique, et un dispositif destiné à appliquer une pression au film d'amortissement pneumatique (1), caractérisé en ce que

(A) le dispositif destiné à appliquer une pression au film d'amortissement (1) comporte un dispositif destiné à faire suivre au film un trajet courbe sur l'électrode en forme de rouleau (3) afin que, lors de l'utilisation, les fonds (11) des cavités du film d'amortissement pneumatique (1) soient repoussés contre l'électrode en forme de rouleau (3),

(B) une électrode (3) en forme de rouleau au moins d'un premier type, ayant des électrodes (5) en forme de couteau placées des deux côtés est disposée, dans le sens de déplacement du film d'amortissement pneumatique (1), en avant d'au moins une électrode en forme de rouleau (4) d'un second type, une électrode en forme de tige (9) étant disposée tangentiellement à l'électrode en forme de rouleau (4) du second type,

(C) des chambres pneumatiques (6) sont disposées au-dessous des électrodes en forme de rouleau (3, 4) du premier type et du second type, les extrémités supérieures de ces chambres entourant les électrodes en forme de rouleau (3, 4) au maximum jusqu'à la moitié du diamètre de l'électrode en forme de rouleau (3, 4), et

(D) un dispositif destiné à faire passer le film d'amortissement pneumatique (1) sur une ou plusieurs électrodes en forme de rouleau (4) du second type d'une manière telle que le film (1) d'amortissement pneumatique n'est pas au contact des électrodes en forme de rouleau (4).

3. Appareil selon la revendication 2, caractérisé en ce qu'une plaque isolante (7) est montée à la surface d'au moins une électrode en forme de couteau (5) tournée vers l'électrode en forme de rouleau (3) du premier type.

4. Appareil selon la revendication 3, caractérisé en ce que la plaque isolante (7) est formée de polytétrafluoréthylène.

5. Appareil selon l'une quelconque des revendications 2 à 4, caractérisé en ce que l'électrode en forme de tige (9) est entourée par un manchon céramique (8).

6. Appareil selon l'une quelconque des revendications 2 à 5, caractérisé en ce que l'électrode en forme de tige (9) est disposée, dans le sens de progression du film d'amortissement pneumatique (1) en avant de l'électrode en forme de rouleau (4) du second type.

7. Appareil selon l'une quelconque des revendications 2 à 6, caractérisé en ce qu'un rouleau d'introduction (14) est disposé, dans le sens de progression du film d'amortissement pneumatique (1), en avant des électrodes en forme de rouleau (3, 4) et/ou un rouleau de sortie (15) est disposé après les électrodes en forme de rouleau (3, 4).

8. Appareil selon l'une quelconque des revendications 2 à 7, caractérisé en ce qu'au moins une électrode en forme de rouleau (3 ou 4) et/ou moins deux rouleaux d'introduction (14) et/ou le rouleau de sortie (15) est mené.

9. Appareil selon la revendication 8, caractérisé en ce que toutes les électrodes en forme de rouleau (3, 4) et le rouleau d'introduction (14) sont menées en synchronisme et le rouleau de sortie (15) est réglable séparément.

10. Appareil selon l'une quelconque des revendications 2 à 9, caractérisé en ce que l'air des chambres pneumatiques (6) a une pression correspondant à une colonne d'eau de 300 à 600 mm.

11. Appareil selon l'une quelconque des revendications 2 à 10, caractérisé en ce qu'une tension de sortie alternative de 15 kV au maximum, ayant une fréquence de 20 à 30 kHz, est appliquée à toutes les électrodes (3, 4, 5 et 6).

12. Apppareil selon l'une quelconque des revendications 2 à 11, caractérisé en ce que le dispositif destiné à faire circuler le film (1) d'amortissement pneumatique sur une ou plusieurs électrodes en forme de rouleau du second type (4) comporte, dans le sens de déplacement du film d'amortissement pneumatique (1), un rouleau de support (16) placé entre la dernière électrode en forme de rouleau (3) du premier type et la première électrode en forme de rouleau (4) du premier type et/ou un rouleau de support (16) placé entre les électrodes en forme de rouleau (4) du second type.

*FIG.I*

FIG.II

0 089 791

FIG.III

0 089 791